# EUROPEAN PATENT APPLICATION

(11) **EP 1 533 918 A2**
(43) Date of publication of application: **25.05.2005**
(21) Application number: 04026696.7
(22) Date of filing: 10.11.2004
(51) Int. Cl.: H04B 7/08

(54) **Diversity receiver**

(30) Priority: 21.11.2003 JP 2003392465
(71) Applicant: Pioneer Corporation, Meguro-ku, Tokyo (JP)
(72) Inventor: Miyahara, Yutaka, c/o Kawagoe Koujou, Kawagoe-shi, Saitama-ken 350-8555 (JP); Tsushima, Masahiro, c/o Kawagoe Koujou, Kawagoe-shi, Saitama-ken 350-8555 (JP); Tani, Masanobu, c/o Kawagoe Koujou, Kawagoe-shi, Saitama-ken 350-8555 (JP); Kato, Sei, c/o Kawagoe Koujou, Kawagoe-shi, Saitama-ken 350-8555 (JP)
(74) Representative: Bohnenberger, Johannes, Dr.

(57) **Abstract**

A receiver (100, 200, 300) which selects optimum antennas while minimizing the number of times of antenna switching is provided. In this receiver (100, 200, 300), three or more antennas (101, 301a-301d) receive radio waves, and output respective transmission signals. Two antennas are selected by a selecting unit (102, 303, 304), and the transmission signals output from the two antennas are demodulated individually and combined. Moreover, the quality levels of the transmission signals output from the antennas are detected by a detecting unit (106, 312). When the quality level of the transmission signal output from at least either one of the antennas is lower than a predetermined level, a control unit (107, 312) selects two antennas from among the three or more antennas (101, 301a-301d) based on the quality levels of the transmission signals output from the antennas. Consequently, when the quality level of the transmission signal output from a selected antenna falls below the predetermined level, optimum antennas can be selected based on the detected quality levels of the transmission signals with an improvement to the reception quality.

## Description

### BACKGROUND OF THE INVENTION

The present invention relates to a receiver, a receiving method, a reception controlling program, and a recording medium.

In radio communications such as terrestrial digital broadcasting, orthogonal frequency division multiplexing (OFDM) is adopted for higher speed and higher quality of the radio communications. For the sake of avoiding a drop in the performance of reception of OFDM signals ascribable to multipath fading, diversity receiving apparatuses are also adopted.

Among such diversity receiving apparatuses disclosed heretofore is a combining diversity receiving apparatus which causes no deterioration in diversity characteristic even under the application of reception levels as high as can degrade the bit error rate (BER). In this diversity receiving apparatus, the reception levels of the reception signals in respective channels are detected by level detection circuits. Threshold comparison circuits compare the reception levels with such a level threshold as can degrade the reception BER. Based on the results of comparison, a binary soft decision circuit decides which channels to select, and generates a binary decision value. A weighting factor generating circuit generates the weighting factors of the respective reception signals from the binary decision value. A multiplication combining circuit obtains a combined diversity output based on the weighting factors and the demodulation signals from demodulation circuits (for example, see Japanese Patent Application Laid-Open No. 2002-300098).

According to the conventional technology described in the foregoing Japanese Unexamined Patent Publication No. 2002-300098, however, the reception signals output from a plurality of respective antennas are demodulated by a plurality of tuners which are connected to the plurality of antennas correspondingly, and then the demodulated reception signals are combined. In this configuration, when the antennas fall in reception level, the reception signals with fallen reception levels must be used for demodulation and combining. This produces such problems as a drop in reception quality.

### SUMMARY OF THE INVENTION

It is thus an object of the present invention to solve the foregoing problems and provide a receiver, a receiving method, a reception controlling program, and a recording medium for improved reception quality.

To achieve the foregoing obj ect, a diversity receiver according to a first aspect of the present invention comprises: at least three or more antennas for receiving radio waves and outputting transmission signals; selecting means for selecting two antennas from among the three or more antennas; first demodulation signal generating means for generating a demodulation signal by demodulating the transmission signal output from either one of the two antennas selected by the selecting means; second demodulation signal generating means for generating a demodulation signal by demodulating the transmission signal output from the other of the two antennas selected by the selecting means; combining means for combining the demodulation signal generated by the first demodulation signal generating means and the demodulation signal generated by the second demodulation signal generating means; detecting means for detecting quality levels of the transmission signals output from the three or more antennas; and control means for controlling the selecting means based on the quality levels of the transmission signals output from the three or more antennas when the quality level of the transmission signal output from at least either one of the two antennas selected by the selecting means is lower than a predetermined level.

A receiving method according to a second aspect of the present invention is one for generating demodulation signals by demodulating transmission signals output from two antennas, respectively, out of transmission signals output from at least three or more antennas for receiving radio waves, and combining the demodulation signals generated. The receiving method comprises: a first selecting step of selecting the two antennas from among the three or more antennas; a detecting step of detecting quality levels of the transmission signals output from the three or more antennas; and a second selecting step of selecting two antennas from among the three or more antennas based on quality levels of the transmission signals output from the three or more antennas when the quality level of the transmission signal output from at least either one of the two antennas selected in the first selecting step is lower than a predetermined level.

A reception controlling program according to a third aspect of the present invention is one for making a computer control a receiver for selecting two antennas from among at least three or more antennas for receiving radio waves, generating demodulation signals by demodulating transmission signals output from the selected two antennas, respectively, and combining the demodulation signals generated. The reception controlling program makes the computer detect quality levels of the transmission signals output from the three or more antennas, and when the quality level of the transmission signal output from at least either one of the selected two antennas is lower than a predetermined level, select two antennas from among the three or more antennas based on the quality levels of the transmission signals output from the three or more antennas.

A recording medium according to a fourth aspect of the present invention stores the reception controlling program as described in the third aspect of the present invention.

### BRIEF DESCRIPTION OF THE DRAWINGS

These and other objects and advantages of the present invention will become clear from the following description with reference to the accompanying drawings, wherein:
Fig. 1 is a block diagram showing the functional configuration of a receiver according to an embodiment of the present invention;
Fig. 2 is a block diagram showing another example of the functional configuration of the receiver according to the embodiment of the present invention;
Fig. 3 is a block diagram showing the hardware configuration of a diversity receiving apparatus which is a practical example of the receiver according to the embodiment of the present invention;
Fig. 4 is a flowchart (part 1) showing the steps of diversity reception processing according to this practical example;
Fig. 5 is a flowchart (part 2) showing the steps of diversity reception processing according to this practical example;
Fig. 6 is a flowchart (part 3) showing the steps of diversity reception processing according to this practical example;
Fig. 7 is a timing chart (part 1) showing the steps of diversity reception processing according to this practical example; and
Fig. 8 is a timing chart (part 2) showing the steps of diversity reception processing according to this practical example.

### DETAILED DESCRIPTION OF THE PREFERRED EMBODIMENT

Hereinafter, a preferred embodiment of the receiver and the receiving method according to the present invention will be described with reference to the accompanying drawings.

### (Embodiment)

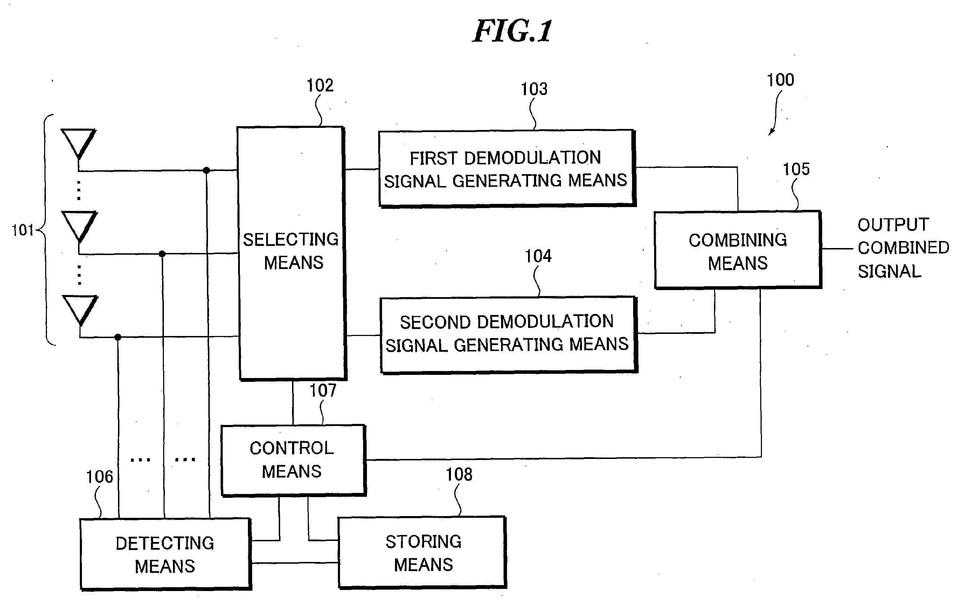

Fig. 1 is a block diagram showing the functional configuration of a receiver 100 according to an embodiment of the present invention. As shown in Fig. 1, the receiver 100 comprises at least three or more antennas 101, selecting means 102, first demodulation signal generating means 103, second demodulation signal generating means 104, combining means 105, detecting means 106, control means 107, and storing means 108.

The at least three or more antennas 101 receive radio waves transmitted from arbitrary broadcast stations, and output transmission signals. The selecting means 102 selects two antennas from among the three or more antennas. The first demodulation signal generating means 103 generates a demodulation signal by demodulating the transmission signal output from either one of the two antennas selected by the selecting means 102. The second demodulation signal generating means 104 generates a demodulation signal by demodulating the transmission signal output from the other of the two antennas selected by the selecting means 102. The combining means 105 combines the demodulation signal generated by the first demodulation signal generating means 103 and the demodulation signal generated by the second demodulation signal generating means 104, and outputs the combined signal.

The detecting means 106 detects the quality levels of the transmission signals output from the three or more antennas 101. The quality levels to be detected by this detecting means 106 include the powers of the transmission signals, the ratios of the signal levels to noise, information on pilot signals (amplitudes andphases) obtained from the demodulation signals, bit error rates, and impulse responses.

The control means 107 controls the selecting means 102 based on the quality levels of the transmission signals output from the three or more antennas when the quality level of the transmission signal output from at least either one of the two antennas selected by the selecting means 102 is lower than a predetermined level. The storing means 108 stores the quality levels of the transmission signals output from the three or more antennas 101, detected by the detecting means 106.

When radio waves are transmitted from arbitrary broadcast stations, this receiver 100 receives the radio waves with the at least three or more antennas 101. When the radio waves are received by the three or more antennas 101, the three or more antennas 101 output respective transmission signals. Then, when two antennas are selected from among the three or more antennas 101, the transmission signals output from the selected two antennas are demodulated to output respective demodulation signals. Then, the output demodulation signals are combined.

In the receiver 100, the quality levels are detected of the transmission signals output from the three or more antennas 101. When both the quality levels of the transmission signals output from the selected two antennas are higher than or equal to the predetermined level, the transmission signals output from the selected two antennas are demodulated.

On the other hand, if the quality level of the transmission signal output from at least either one of the selected two antennas is lower than the predetermined level, two antennas are selected from among the three or more antennas 101 based on the quality levels of the transmission signals output from the three or more antennas 101. Consequently, according to this receiver 100, when the quality level of the transmission signal output from a selected antenna falls below the predetermined level, optimum antennas can be selected based on the quality levels of the detected transmission signals. This allows an improvement to the reception quality.

The detecting means 106 described above detects the quality levels of the transmission signals output from all the antennas 101 all the time. This makes it possible to judge the quality levels of the transmission signals output from all the antennas 101 and select optimum antennas immediately when the quality level of the transmission signal output from a selected antenna falls below the predetermined level.

Alternatively, the detecting means 106 may detect only the quality levels of the transmission signals output from the two antennas selected by the selecting means 102. In this case, the control means 107 controls the detecting means 106 to detect the quality levels of the transmission signals output from the antennas not selected by the selecting means 102 only if the quality level of the transmission signal output from at least either one of the two antennas selected by the selecting means 102 is lower than the predetermined level.

Consequently, the transmission signals for the detecting means 106 to detect the quality levels thereof are the ones output from the antennas selected by the selecting means 102. The quality levels of the transmission signals output from the not-selected antennas are not detected. Thus, the detecting means 106 has only to monitor the transmission signals of the selected two antennas alone, which allows power saving of the detecting means 106. Moreover, thequality levels of the transmission signals output from the antennas not selected by the selecting means 102 are detected only when the quality level of the transmission signal output from at least either one of the selected antennas is lower than the predetermined level. This makes it possible to achieve the power saving of the detecting means 106 while maintaining the reception quality.

Furthermore, when the quality level of the transmission signal output from either one of the two antennas selected by the selecting means 102 is lower than the predetermined level, the control means 107 may control the selecting means 102 to select an antenna whose transmission signal has a quality level higher than or equal to the predetermined level from among the not-selected antennas instead of the one antenna. In this case, since the one antenna whose transmission signal falls below the predetermined level in quality level is switched to the other antenna, it is possible to reduce switching noise which occurs when both the antennas are switched simultaneously.

In addition, antennas whose transmission signals have quality levels higher than or equal to the predetermined level can be always selected instead of antennas whose transmission signals fall below the predetermined level in quality level . As a result, it is possible to maintain the quality levels of the transmission signals to be demodulated higher than or equal to the predetermined level, thereby achieving an improved reception quality.

When the quality level of the transmission signal output from either one of the two antennas selected by the selecting means 102 is lower than the predetermined level, the control means 107 may control the selecting means 102 to select an antenna whose transmission signal has the highest quality level from among the other antenna and the not-selected antennas instead of the one antenna.

In this case, when the quality levels of the transmission signals output from the not-selected antennas are higher than the quality level of the transmission signal output from the one antenna, the antenna whose transmission signal has the highest quality level canbeselectedfromamongthenot-selectedantennas. Consequently, it is possible to maintain the quality levels of the transmission signals to be demodulated higher than or equal to the predetermined level, with an improvement to the reception quality. Moreover, when the quality level of the transmission signal output from the one antenna is higher than the quality levels of the transmission signals output from the not-selected antennas, the one antenna is selected. This can suppress the frequency of antenna switching and achieve the power saving of the selecting means 102.

The control means 107 may also control the selecting means 102 not to change the one antenna when all the quality levels of the transmission signals output from the antennas not selected by the selecting means 102 are lower than the predetermined level. This can reduce the frequency of antenna switching and prevent switching noise from occurring due to the switching of the selected two antennas.

Furthermore, when both the quality levels of the transmission signals output from the two antennas selected by the selecting means 102 are lower than the predetermined level, the control means 107 may control the selecting means 102 to select two antennas whose transmission signals have the highest quality levels from among the three or more antennas 101 instead of the two antennas selected by the selecting means 102. Since the antennas of the highest quality levels can thus be selected, it is possible to improve the quality levels of the transmission signals to be demodulated.

In this case, the control means 107 may also control the selecting means 102 not to change the two antennas selected by the selecting means 102 when all the quality levels of the transmission signals output from the antennas not selected by the selecting means 102 are lower than the predetermined level. This can reduce the frequency of antenna switching and prevent switching noise from occurring due to the switching of the selected two antennas.

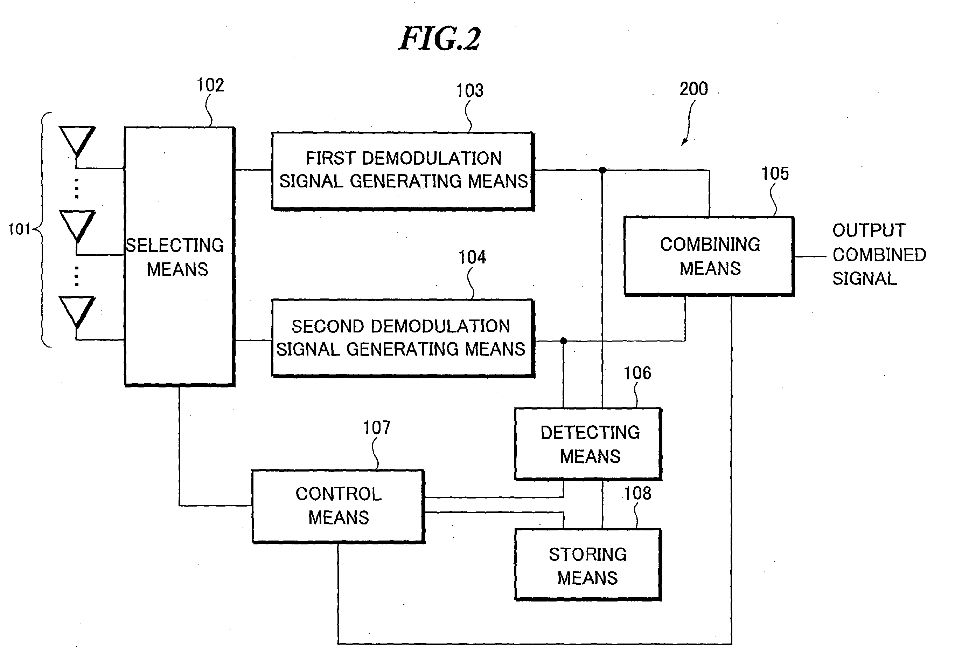

Now, description will be given of another example of the functional configuration of the receiver 100 according to the embodimentdescribedabove. Fig . 2 is a block diagram showing another example of the functional configuration of the receiver 100 according to the embodiment of the present invention. In the case of the receiver 100 shown in Fig. 1, the detecting means 106 is connected with three or more antennas, and detects the quality levels of the transmission signals output from the three or more antennas 101. On the other hand, the receiver 200 shown in Fig. 2 has the configuration that the detecting means 106 is connected with the first and second demodulation signal generating means 103 and 104, and detects the quality levels of the transmission signals output from selected two antennas based on the demodulation signals output from the first and second demodulation signal generating means 103 and 104.

In this case, the quality levels of the transmission signals output from the selected two antennas can be detected simply by making the demodulation signals output to the combining means 105 branch. This can simplify the configuration and miniaturize the detecting means 106. The demodulation signals obtained from the first and second demodulation signal generating means 103 and 104 are lower than the transmission signals obtained directly from the antennas in power. The detecting means 106 can thus detect the qualitylevelswithlowerpower,whichallowspowersaving. Besides, it is possible to detect the quality levels obtainable from the demodulation signals, such as information on pilot signals and bit error rates, for the sake of antenna selection.

When the quality level of the transmission signal output from either one of the two antennas selected by the selecting means 102 is lower than the predetermined level, the control means 107 may control the selecting means 102 to select the not-selected antennas in succession instead of the one antenna. Consequently, since the one antenna whose transmission signal falls below the predetermined level in quality level is switched to the other antenna, it is possible to reduce switching noise which occurs when both the antennas are switched simultaneously.

Moreover, when both the quality levels of the transmission signals output from the two antennas selected by the selecting means 102 are lower than the predetermined level, the control means 107 may control the selecting means 102 to select the not-selected antennas in succession instead of either one of the two antennas selected by the selecting means 102. In this case, since one antenna whose transmission signal falls below the predetermined level in quality level is switched to another antenna, it is possible to reduce switching noise which occurs when both the antennas are switched simultaneously.

The detecting means 106 may detect the quality levels of the transmission signals output from the antennas selected by the selecting means 102 in succession, thereby detecting the quality levels of the transmission signals output from the respective antennas. In this case, the control means 107 can control the selecting means 102 based on the quality levels of the transmission signals output from the respective antennas, detected by this detecting means 106.

Consequently, the quality levels of the transmission signals output from all the antennas can be detected by using the detecting means 106 which detects the quality levels of the transmission signals output from two antennas. In other words, the detecting means 106 need not have as many connection lines as the number of antennas, and the two connection lines for establishing connection with the first and second demodulation signal generating means 103 and 104 are sufficient. The number of connection lines can thus be reduced to miniaturize the detecting means 106.

In the receivers 100 and 200 shown in Figs. 1 and 2 as mentioned above, when both the two antennas selected by the selecting means 102 are to be changed, the control means 107 may control the selecting means 102 to change the antennas one by one. When the antennas are thus changed one by one, it is possible to reduce the switching noise which occurs in switching both the antennas simultaneously.

Furthermore, the receivers 100 and 200 shown in Figs. 1 and 2 as mentioned above may comprise the storing means 108 which stores the quality levels of the transmission signals output from the three or more antennas 101, detected by the detecting means 106. Here, the control means 107 can control the selecting means 102 based on the quality levels of the transmission signals output from the three or more antennas 101, stored in the storing means 108.

Consequently, the storing means 108 can store the quality levels of the transmission signals output from the respective antennas, and the stored quality levels can be compared with each other. It is therefore possible to establish relative ranking among the quality levels, and select optimum antennas based on the ranking.

In the receiver 100 shown in Fig. 1 and the receiver 200 shown in Fig. 2 as mentioned above, the control means 107 may also control the combining means 105 to change the combining ratio between the demodulation signal generated by the first demodulation signal generating means 103 and the demodulation signal generated by the second demodulation signal generating means 104.

Consequently, the combining ratio can be changed in accordance with the quality levels of the transmission signals output from the antennas selected by the selecting means 102, so that the combined signal output from the combining means 105 is improved in quality level. Specifically, for example, if the quality level of a transmission signal A output from either one of the selected antennas is higher than or equal to the predetermined level, the quality level of a transmission signal B output from the other antenna is lower than the predetermined level, and noise is detected beyond a predetermined amount, then the combining is effected with such a ratio that a demodulation signal a, or the transmission signal A demodulated, is greater than a demodulation signal b, or the transmission signal B demodulated, in proportion. In this way, the combined signal of high quality can be output by controlling the combining means 105 in accordance with the actual quality levels of the respective transmission signals. This combining ratio may be set in advance. The ratio between both the quality levels may also be used.

In the receivers 100 and 200 according to the embodiment described above, the demodulation signals are generated by the first demodulation signal generating means 103 and the second demodulation signal generating means 104, respectively. Nevertheless, the means for generating demodulation signals are not limited to two in number, but may be provided in three or more. Here, the antennas shall be provided more than the number of means for generating demodulation signals.

### [Practical Example]

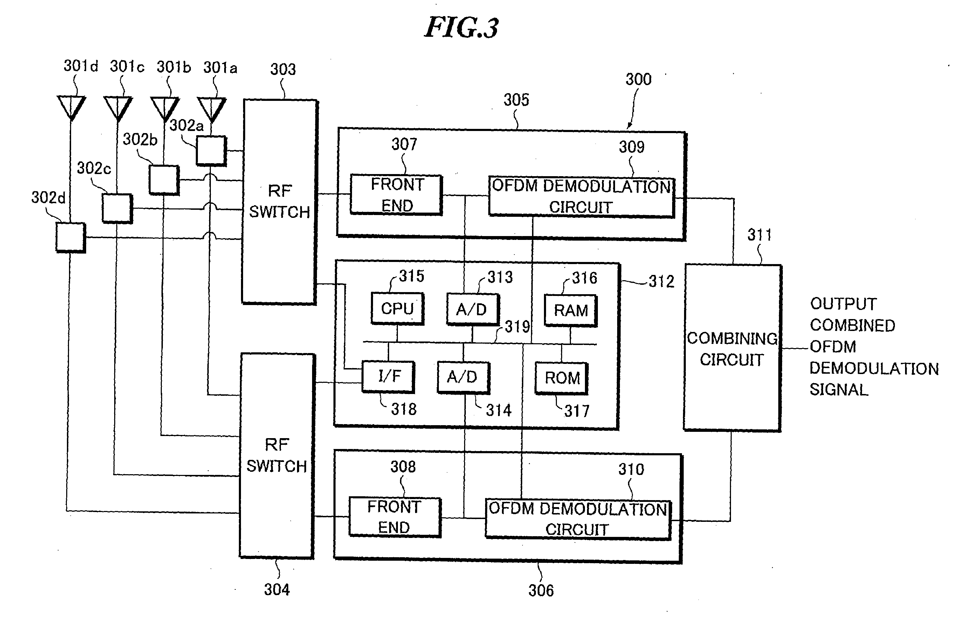

Next, description will be given of a diversity receiving apparatus which is a practical example of the receiver according to the embodiment described above. Fig. 3 is a block diagram showing the hardware configuration of the diversity receiving apparatus. This practical example will deal with the case where the number of antennas is four and the number of tuners is two.

The diversity receiving apparatus 300 of this practical example comprises four antennas 301a-301d, four distributors 302a-302d, a first RF switch 303, a second RF switch 304, a first tuner 305, a second tuner 306, a combining circuit 311, and a control circuit 312. The distributors 302a-302d are formed for the antennas 301a-301d, respectively, and distribute radio frequency signals, or transmission signals output by the antennas 301a-301d as a result of reception of radio waves including OFDM signals, to the RF switches 303 and 304.

The first RF switch 303 and the second RF switch 304 each are connected with the distributors 302a-302d, and input the radio frequency signals output from the antennas 301a-301d through the distributors 302a-302d. The first RF switch 303 and the second RF switch 304 are also connected to the first tuner 305 and the second tuner 306, respectively. Suppose here that the first RF switch 303 connects the antenna 301a and the first tuner 305, and the second RF switch 304 connects the antenna 301b and the second tuner 306.

Then, the first RF switch 303 and the second RF switch 304 switch the connections of the first tuner 305 and the second tuner 306, respectively, to either of the antennas 301c and 301d for reconnection. These first RF switch 303 and the second RF switch 304 constitute the selecting means 102 shown in Figs. 1 and 2.

The first tuner 305 is composed of a front end 307 and an OFDM demodulation circuit 309. Similarly, the second tuner 306 is composed of a front end 308 and an OFDM demodulation circuit 310. The front ends 307 and 308 are connected with the RF switches 303 and 304, respectively, and convert the radio frequency signals output from the respective RF switches 303 and 304 into OFDM signals of intermediate frequencies. Specifically, each of the front ends 307 and 308 comprises such components as an attenuator, an amplifier, an AGC circuit, a band-pass filter, and a mixer which are not shown.

The OFDM demodulation circuits 309 and 310 demodulate the OFDM signals of intermediate frequencies output from the respective front ends 307 and 308 into OFDM demodulation signals. Specifically, each of the OFDM demodulation circuits 309 and 310 comprises such components as an A/D converter, an orthogonal demodulation circuit, and a fast Fourier transformer which are not shown. The A/D converter digitally converts the OFDM signal of intermediate frequency. The orthogonal demodulation circuit converts the digitally-converted OFDM signal of intermediate frequency into an OFDM signal of a complex baseband. The fast Fourier transformer transforms the OFDM signal of the complex baseband into an OFDM signal on the frequency axis through the application of fast Fourier transform processing. This OFDM demodulation signal is output to the combining circuit 311.

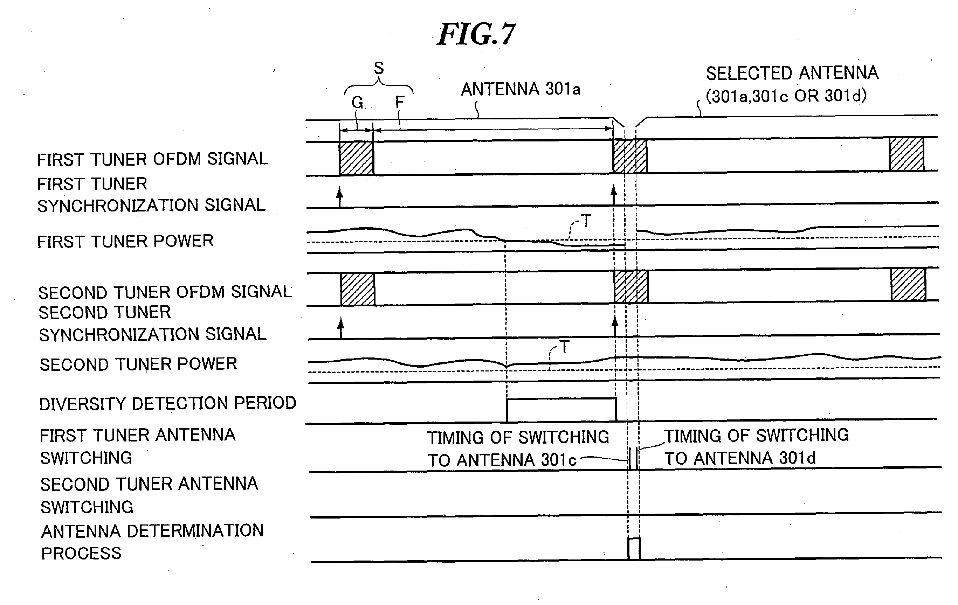

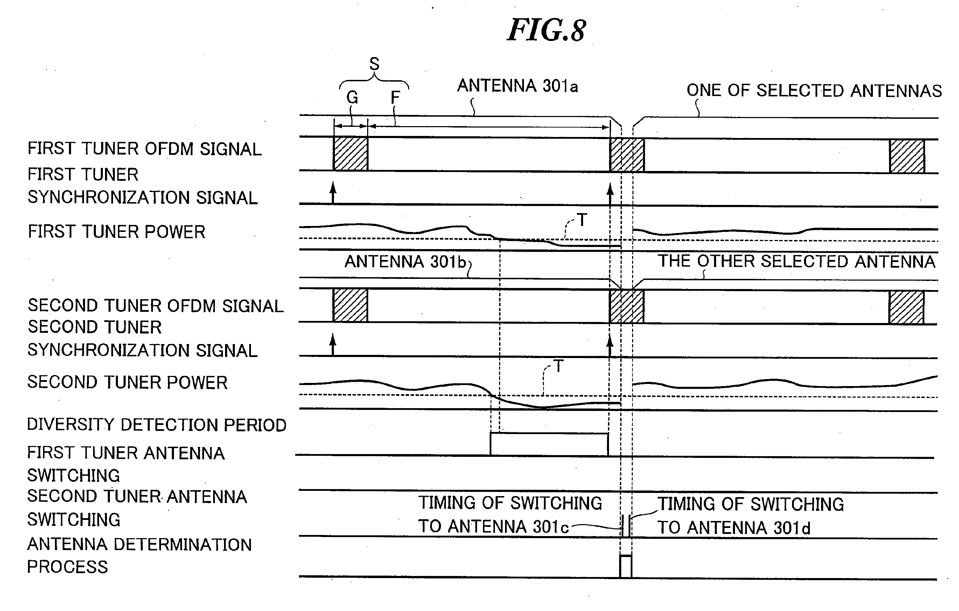

As shown in Figs. 7 and 8, eachof the OFDM demodulation circuits 309 and 310 outputs a synchronization signal to the control circuit 312 each time the symbol period of the OFDM demodulation signal starts. The first tuner 305 constitutes the first demodulation signal generating means 103 shown in Figs. 1 and 2. The second tuner 306 constitutes the second demodulation signal generating means 104 shown in Figs. 1 and 2.

The combining circuit 311 performs combining processing on the OFDM demodulation signals output from the first tuner 305 and the second tuner 306 by using a known combining technique such as selection combining and maximal ratio combining, and outputs a combined OFDM demodulation signal. This combining circuit 311 constitutes the combining means 105 shown in Figs. 1 and 2.

The control circuit 312 comprises, for example, two A/D converters 313 and 314, a CPU 315, a RAM 316, a ROM 317, an I/F 318, and a bus 319 for connecting these components 313-318. The A/D converters 313 and 314 digitally convert the OFDM signals of intermediate frequencies output from the front ends 307 and 308, respectively. The.CPU 315 exercises control over the entire diversity receiving apparatus 300. The RAM 316 is used as a work area of the CPU 315. The ROM 317 contains programs for controlling the diversity receiving apparatus 300.

The I/F 318 outputs antenna switching signals to the first RF switch 303 and the second RF switch 304. This control circuit 312 constitutes the control means 107, the detecting means 106, and the storing means 108 shown in Fig. 2. In other words, the functions of the control means 107 and the detecting means 106 shown in Fig. 2 can be realized by the CPU 315 executing programs stored in a recording medium, or in concrete terms, such as the ROM 317 and the RAM 316 shown in Fig. 3. The storing means 108 shown in Fig. 2 can be realized by a recording medium, or in concrete terms, such as the ROM 317 and the RAM 316 shown in Fig. 3.

The A/D converters 313 and 314 may be provided as many as the number of antennas 301a-301d (four, in this example) so that they are connected with the antennas 301a-301d, respectively. Here, the transmission signals output from any of the antennas 301a-301d can be detected by the control circuit 312. In this case, the control circuit 312 constitutes the control means 107, the detecting means 106, and the storing means 108 shown in Fig. 1. In other words, the functions of the control means 107 and the detecting means 106 shown in Fig. 1 can be realized by the CPU 315 executing programs stored in a recording medium, or in concrete terms, such as the ROM 317 and the RAM 316 shown in Fig. 3. The storing means 108 shown in Fig. 1 can be realized by a recording medium, or in concrete terms, such as the ROM 317 and the RAM 316 shown in Fig. 3.

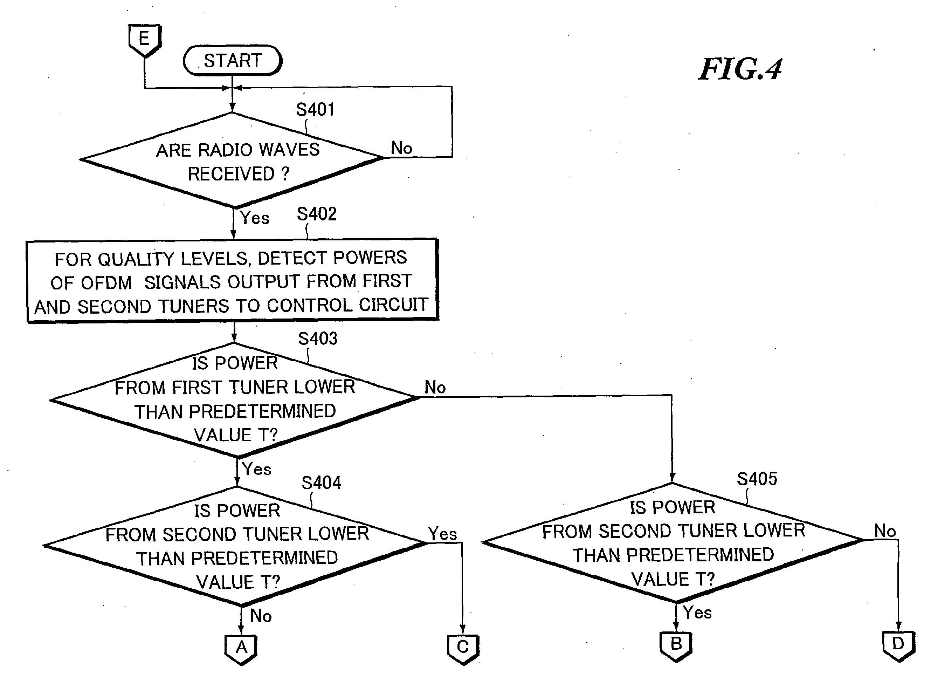

Next, the steps of diversity reception processing according to this practical example will be described. Figs. 4 to 6 are flowcharts showing the steps of the diversity reception processing according to this practical example. Figs . 7 and 8 are timing charts showing the steps of the diversity reception processing according to this practical example. Suppose here the initial state that the first RF switch 303 connects the antenna 301a and the first tuner 305, the second RF switch 304 connects the antenna 301b and the second tuner 306, and the antennas 301c and 301d are connected with neither of the first tuner 305 and the second tuner 306.

The timing chart of Fig. 7 deals with an example where the antenna 301a in connection with the first tuner 305 is switched. The timing chart of Fig. 8 deals with an example where the antennas 301a and 301b in connection with the first tuner 305 and the second tuner 306 are switched. The timing charts of Figs. 7 and 8 show the following items: the OFDM signal of the first tuner 305 which has a single symbol period S consisting of a guard interval G and an FFT window period F; the synchronization signal output from the first tuner 305; the power of the intermediate frequency signal output from the first tuner 305 with a predetermined value T; the OFDM signal of the second tuner 306 which has a single symbol period S consisting of the guard interval G and the FFT window period F; the synchronization signal output from the second tuner 306; the power of the intermediate frequency signal output from the second tuner 306 with the predetermined value T; a diversity detection period; antenna switching of the first tuner 305; antenna switching of the second tuner 306; and an antenna determination process.

As shown in Fig. 4, initially, when radio waves are received (step S401: Yes), the first tuner 305 and the second tuner 306 input the OFDM signals of radio frequencies through the respective RF switches 303 and 304. The OFDM signals of radio frequencies input to the first tuner 305 and the second tuner 306 are converted into OFDM signals of intermediate frequencies by the respective front ends 307 and 308. The OFDM signals of intermediate frequencies are input from the respective front ends 307 and 308 to the control circuit 312. Then, the power of the OFDM signal of intermediate frequency output from the first tuner 305 to the control circuit 312 and the power of the OFDM signal of intermediate frequency output from the second tuner 306 to the control circuit 312 are detected as the quality levels (step S402).

Next, as shown in Figs. 7 and 8, it is determined whether or not the power of the OFDM signal of intermediate frequency output from the first tuner 305 is lower than the predetermined value T. It is also determined whether or not the power of the OFDM signal of intermediate frequency output from the second tuner 306 is lower than the predetermined value T (steps S403 to S405).

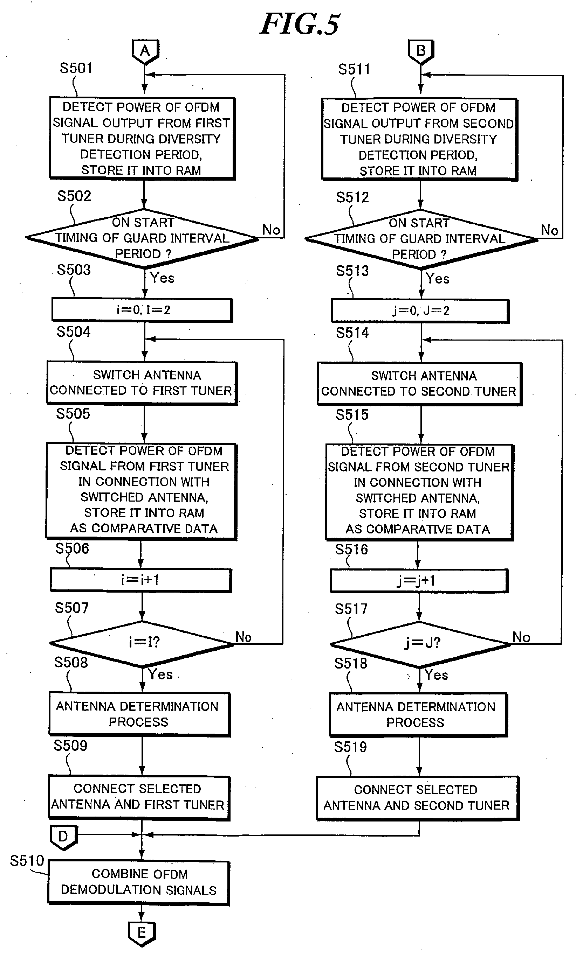

If it is determined that the power of the OFDM signal of intermediate frequency output from the first tuner 305 alone is lower than the predetermined value T (step S403: Yes; step S404: No), the power of the OFDM signal of intermediate frequency output from the first tuner 305 is detected during the period between when it falls below the predetermined value T and when the guard interval period is started (hereinafter, this period will be referred to as "diversity detection period"), and stored into the RAM 316 as shown in Fig. 5 (step S501).

Then, whether it is on the start timing of the guard interval period or not is determined (step S502). The start timing of the guard interval period corresponds to the timing of detection of the synchronization signal if the synchronization signal is detectable. If the synchronization signal is undetectable, it is the timing which is estimated as the beginning of the guard interval period by a not-shown counter or the like. If it is determined to be off the start timing of the guard interval period (step S502: No), the processing returns to step S501.

On the other hand, if it is determined to be on the start timing of the guard interval period (step S502: Yes), the number of times i the antenna connected to the first tuner 305 is switched is set as i = 0, and the number of unconnected antennas I is set as I = 2 (step S503). During the guard interval period, the first RF switch 303 is controlled to switch the antenna 301a to the antenna 301c which is in connection with neither of the tuners 305 and 306 (step S504) . Then, the power is detected of the OFDM signal of intermediate frequency which is output from the first tuner 305 as a result of reception of radio waves by the antenna 301c. This detected power is stored into the RAM 316 as comparative data (step S505).

Then, the number of times i of antenna switching is incremented by one (step S506) . If the number of times i of antenna switching is yet to reach the number of unconnected antennas I (I = 2) (step S507: No) , the processing returns to step S504. On the other hand, if the number of unconnected antennas I (I = 2) is reached (step S507: Yes), the antenna determination process is performed. Here, the maximum value of the power detected during the diversity detection period may be extracted as the detected power during the diversity detection period. The minimum value of the same may be extracted. The power averaged across the diversity detection period may be extracted as a mean value.

Then, in this antenna determination process, the antenna to receive the OFDM signal is determined based on the detected power during the diversity detection period and the powers of the comparative data (step S508). Specifically, in this determination process, the antenna which receives the OFDM signal of the highest power out of the detected power during the diversity detection period and the powers of the comparative data may be selected. When all the powers of the comparative data are higher than the detected power during the diversity detection period, any of the antennas which receive the powers of the comparative data can be selected. On the other hand, when all the powers of the comparative data are lower than or equal to the detected power during the diversity detection period, the antenna which receives the OFDM signal of the power during the diversity detection period can be selected.

Then, the first RF switch 303 is controlled to connect the selected antenna and the first tuner 305 (step S509 ) . Subsequently, the OFDM demodulation signal output from the first tuner 305 and the OFDM demodulation signal output from the second tuner 30-6 are combined (step S510). Consequently, a combined OFDM demodulation signal of high quality can be output. Then, the processing returns to step S401.

Now, if it is determined that the power of the OFDM signal of intermediate frequency output from the second tuner 306 alone is lower than the predetermined value T (step S403: No; step S405: Yes), the power of the OFDM signal of intermediate frequency output from the second tuner 306 is detected during the diversity detection period, and stored into the RAM 316 as shown in Fig. 5 (step S511).

Then, if it is determined to be off the start timing of the guard interval period (step S512: No), the processing returns to step S511. On the other hand, if it is determined to be on the start timing of the guard interval period (step S512: Yes), the number of times j the antenna connected to the second tuner 306 is switched is set as j = 0, and the number of unconnected antennas J is set as J = 2 (step S513). During the guard interval period, the second RF switch 304 is controlled to switch the antenna 301b to the antenna 301c which is in connection with neither of the tuners 305 and 306 (step S514). Then, the power is detected of the OFDM signal of intermediate frequency which is output from the second tuner 306 as a result of reception of radio waves by the antenna 301c. This detected power is stored into the RAM 316 as comparative data (step S515) .

Then, the number of times j of antenna switching is incremented by one (step S516). If the number of times j of antenna switching is yet to reach the number of unconnected antennas J (J = 2) (step S517 : No), the processing returns to step S514 . On the other hand, if the number of unconnected antennas J (J = 2) is reached (step S517: Yes), the antenna determination process is performed (step S518). Here, the maximum value of the power detected during the diversity detection period may be extracted as the detected power during the diversity detection period. The minimum value of the same may be extracted. The power averaged across the diversity detection period may be extracted as a mean value.

Then, in this antenna determination process, the antenna to receive the OFDM signal is determined based on the detected power during the diversity detection period and the powers of the comparative data. Since the concrete example of this determination process is the same as that of the foregoing step S508, description thereof will be omitted here. Then, the second RF switch 304 is controlled to connect the selected antenna and the second tuner 306 (step S519), and the processing moves to step S510. Consequently, a combined OFDM demodulation signal of high quality can be output.

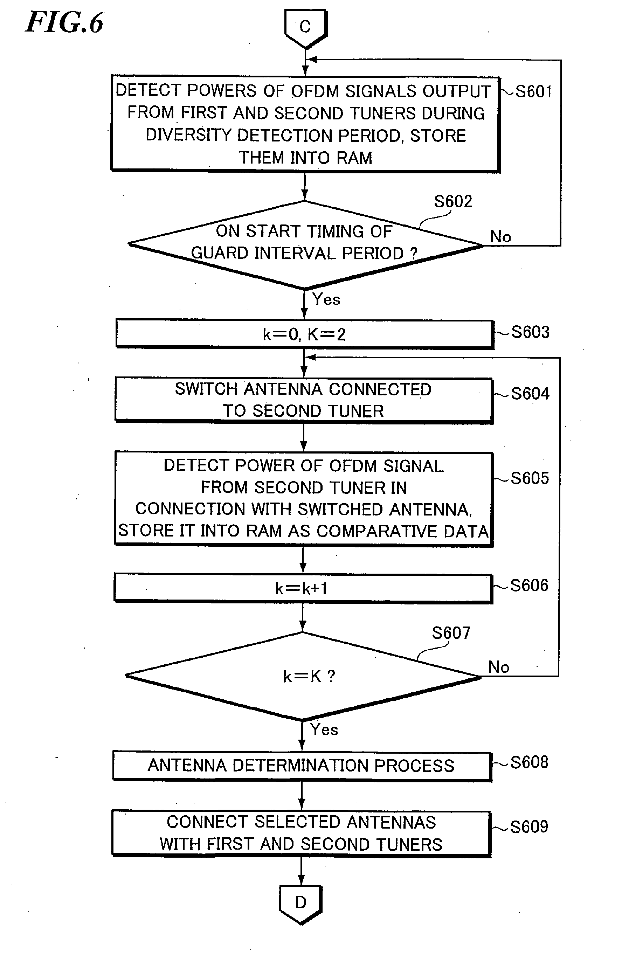

Now, if it is determined that the powers of the OFDM signals of intermediate frequencies output from the first tuner 305 and the second tuner 306 both are lower than the predetermined value T (step S403: Yes; step S404: Yes), the powers of the OFDM signals of intermediate frequencies output from the first tuner 305 and the second tuner 306 are detected during the diversity detection period, and stored into the RAM 316 as shown in Fig. 6 (step S601).

Then, if it is determined to be off the start timing of the guard interval period (step S602: No), the processing returns to step S601. On the other hand, if it is determined to be on the start timing of the guard interval period (step S602: Yes), the number of times k the antenna connected to the second tuner 306 is switched is set as k = 0, and the number of unconnected antennas K is set as K = 2 (step S603). During the guard interval period, the second RF switch 304 is controlled to switch the antenna 301b to the antenna 301c which is in connection with neither of the first tuner 305 and the second tuner 306 (step S604). Then, the power is detected of the OFDM signal of intermediate frequency which is output from the second tuner 306 as a result of reception of radio waves by the antenna 301c. This detected power is stored into the RAM 316 as comparative data (step S605).

Then, the number of times k of antenna switching is incremented by one (step S606). If the number of times k of antenna switching is yet to reach the number of unconnected antennas K (K = 2) (step S607: No), the processing returns to step S604 . On the other hand, if the number of unconnected antennas K (K = 2) is reached (step S607: Yes), the antenna determination process is performed (step S608). Here, the maximum value of the power detected during the diversity detection period may be extracted as the detected power during the diversity detection period. The minimum value of the same may be extracted. The power averaged across the diversity detection period may be extracted as a mean value.

Then, in this antenna determination process, the antennas to receive the OFDM signals are determined based on the detected powers during the diversity detection period and the powers of the comparative data. Specifically, in this determination process, the antennas which receive the OFDM signals of the two highest powers out of the detected powers during the diversity detection period and the powers of the comparative data can be selected. Then, the first RF switch 303 and the second RF switch 304 are controlled to connect the selected antennas with the first tuner 305 and the second tuner 306 (step S609), and the processing moves to step S510. This makes it possible to output a combined OFDM demodulation signal of high quality. Moreover, the first RF switch 303 and the second RF switch 304 can conduct switching not at the same time but at different timings, so that the occurrence of switching noise is suppressed to output the OFDM demodulation signal of high quality.

Returning to Fig. 4, if it is determined that the powers of the OFDM signals of intermediate frequencies output from the first tuner 305 and the second tuner 306 both are higher than or equal to the predetermined value T (step S403: No; step S405: No), the OFDM signals of intermediate frequencies output from the first tuner 305 and the second tuner 306 are demodulated and the OFDM demodulation signals are combined without switching the antennas as shown in Fig. 5 (step S510).

As has been described, according to the diversity receiving apparatus 300 of this practical example, either of the tuners 305 and 306 can be used as a master tuner for continuing the reception of radio waves and a slave tuner for switching the antenna connection as well, depending on the antenna switching. It is thereforepossible to connect the antennas of higher reception qualities among the plurality of antennas 301a-301d with the tuners 305 and 306 while minimizing the numbers of times for the plurality of antennas 301a-301d to be switched. This makes it possible to output OFDM demodulation signals of high quality all the time.

Moreover, in the practical example described above, the antenna switching control is performed by using the powers of the OFDM signals of intermediate frequencies as the quality levels. Nevertheless, the antenna switching control may be performed by using information on pilot signals, bit error rates, and the like obtained from the respective OFDM demodulation circuits.

The receiver described in the present embodiment can be controlled by running a reception controlling program prepared in advance on a computer such as a personal computer. This program is recorded on a computer-readable recording medium such as a hard disk, flexible disk, CD-ROM, MO, and DVD, and is read from the recording medium by the computer for execution. This program may also be on a transmission medium capable of distribution over a network, such as the Internet.

As above, the receiver, the receiving method, the reception controlling program, and the recording medium according to the present embodiment are useful, for example, for digital television sets and telephone sets, and are particularly suitable for diversity receiving apparatuses such as vehicle-mounted or portable digital television sets and cellular phones.

## Claims

1. A receiver (100, 200, 300) **characterized by**:
at least three or more antennas (101, 301a-301d) for receiving radio waves and outputting transmission signals;
selecting means (102, 303, 304) for selecting two antennas from among the three or more antennas (101, 301a-301d);
first demodulation signal generating means (103, 305) for generating a demodulation signal by demodulating the transmission signal output from either one of the two antennas selected by the selecting means (102, 303, 304);
second demodulation signal generating means (104, 306) for generating a demodulation signal by demodulating the transmission signal output from the other of the two antennas selected by the selecting means (102, 303, 304);
combining means (105, 311) for combining the demodulation signal generated by the first demodulation signal generating means (103, 305) and the demodulation signal generated by the second demodulation signal generating means (104, 306);
detecting means (106, 312) for detecting quality levels of the transmission signals output from the three or more antennas (101, 301a-301d); and
control means (107, 312) for controlling the selecting means (102, 303, 304) based on the quality levels of the transmission signals output from the three or more antennas (101, 301a-301d) when the quality level of the transmission signal output from at least either one of the two antennas selected by the selecting means (102, 303, 304) is lower than a predetermined level.

2. The receiver (100, 200, 300) according to claim 1, wherein:
the detecting means (106, 312) detects only the quality levels of the transmission signals output from the two antennas selected by the selecting means (102, 303, 304); and
the control means (107, 312) controls the detecting means (106, 312) to detect the quality levels of the transmission signals output from the antennas not selected by the selecting means (102, 303, 304) only when the quality level of the transmission signal output from at least either one of the two antennas selected by the selecting means (102, 303, 304) is lower than the predetermined level.

3. The receiver according to claim 1 or 2, wherein:
when the quality level of the transmission signal output from either one of the two antennas selected by the selecting means (102, 303, 304) is lower than the predetermined level, the control means (107, 312) controls the selecting means (102, 303, 304) to select an antenna whose transmission signal has a quality level higher than or equal to the predetermined level from among the not - selected antennas instead of the one antenna.

4. The receiver according to claim 3, wherein:
when the quality level of the transmission signal output from either one of the two antennas selected by the selecting means (102, 303, 304) is lower than the predetermined level, the control means (107, 312) controls the selecting means (102, 303, 304) to select an antenna whose transmission signal has the highest quality level from among the one antenna and the not-selected antennas instead of the one antenna.

5. The receiver according to claim 3 or 4, wherein:
the control means (107, 312) controls the selecting means (102, 303, 304) not to change the one antenna when all the quality levels of the transmission signals output from the antennas not selected bytheselectingmeans (102, 303, 304) are lower than the predetermined level.

6. The receiver according to claim 1 or 2, wherein:
when both the quality levels of the transmission signals output from the two antennas selected by the selecting means (102, 303, 304) are lower than the predetermined level, the control means (107, 312) controls the selecting means (102, 303, 304) to select two antennas whose transmission signals have the highest quality levels from among the three or more antennas (101, 301a-301d) instead of the two antennas selected by the selecting means (102, 303, 304).

7. The receiver according to claim 6, wherein:
the control means (107, 312) controls the selecting means (102, 303, 304) not to change the two antennas selected by the selecting means (102, 303, 304) when all the quality levels of the transmission signals output from the antennas not selected by the selecting means (102, 303, 304) are lower than the predetermined level.

8. The receiver according to claim 1, wherein:
the detecting means (106, 312) detects the quality levels of the transmission signals output from the two antennas selected by the selecting means (102, 303, 304) based on the demodulation signals generated by the respective first and second demodulation signal generating means (103, 305, and 104, 306).

9. The receiver according to claim 8, wherein:
when the quality level of the transmission signal output from either one of the two antennas selected by the selecting means (102, 303, 304) is lower than the predetermined level, the control means (107, 312) controls the selecting means (102, 303, 304) to select not-selected antennas in succession instead of the one antenna.

10. The receiver according to claim 8, wherein:
when both the quality levels of the transmission signals output from the two antennas selected by the selecting means (102, 303, 304) are lower than the predetermined level, the control means (107, 312) controls the selecting means (102, 303, 304) to select not-selected antennas in succession instead of either one of the two antennas selected by the selecting means (102, 303, 304).

11. The receiver according to claim 9 or 10, wherein:
the detecting means (106, 312) detects the quality levels of the transmission signals output from the antennas selected by the selecting means (102, 303, 304) in succession, thereby detecting the quality levels of the transmission signals output from the respective antennas; and
the control means (107, 312) controls the selecting means (102, 303, 304) based on the quality levels of the transmission signals output from the respective antennas, detected by the detecting means (106, 312).

12. The receiver according to any one of claims 1, 2, 6, 8, 10, and 11, wherein:
when both the two antennas selected by the selecting means (102, 303, 304) both are to be changed, the control means (107, 312) controls the selecting means (102, 303, 304) to change the antennas one by one.

13. The receiver according to any one of claims 1 to 12, **characterized by** further comprising storing means (108, 316, 317) for storing the quality levels of the transmission signals output from the three or more antennas (101, 301a-301d), detected by the detecting means (106, 312), wherein
the control means (107 , 312) controls the selecting means (102, 303, 304) based on the quality levels of the transmission signals output from the three or more antennas (101, 301a-301d), stored in the storing means (108, 316, 317).

14. The receiver according to any one of claims 1 to 13, wherein:
the control means (107, 312) controls the combining means (105, 311) to change the combining ratio between the demodulation signal generated by the first demodulation signal generating means (103, 305) and the demodulation signal generated by the second demodulation signal generating means (104, 306).

15. A receiving method for generating demodulation signals by demodulating transmission signals output from two antennas, respectively, out of transmission signals output from at least three or more antennas (101, 301a-301d) for receiving radio waves, and combining the demodulation signals generated, the method
**characterized by**:
a first selecting step of selecting the two antennas from among the three or more antennas (101, 301a-301d);
a detecting step of detecting quality levels of the transmission signals output from the three or more antennas (101, 301a-301d); and
a second selecting step of selecting two antennas from among the three or more antennas (101, 301a-301d) based on quality levels of the transmission signals output from the three or more antennas (101, 301a-301d) when the quality level of the transmission signal output from at least either one of the two antennas selected in the first selecting step is lower than a predetermined level.

16. A reception controlling program for making a computer (315) control a receiver (100, 200, 300) in which two antennas is selected from among at least three or more antennas (101, 301a-301d) for receiving radio waves, demodulation signals are generated by demodulating transmission signals output from the selected two antennas, respectively, and the demodulation signals generated are combined, the program **characterized by** comprising the module of:
detecting quality levels of the transmission signals output from the three or more antennas through the computer; where
when the quality level of the transmission signal output from at least either one of the selected two antennas is lower than a predetermined level (T) , the computer selects two antennas from among the three or more antennas based on the quality levels of the transmission signals output from the three or more antennas.

17. A computer readable storage medium (317) having a reception controlling program stored thereon as set forth in claim 16.
